Europäisches Patentamt

European Patent Office

Office européen des brevets

(11) Veröffentlichungsnummer: **0 075 063**
A1

## (12) EUROPÄISCHE PATENTANMELDUNG

(21) Anmeldenummer: **82102080.7**

(22) Anmeldetag: **15.03.82**

(51) Int. Cl.³: **H 04 N 3/08, G 02 B 27/17**

(30) Priorität: **23.09.81 CH 6134/81**

(43) Veröffentlichungstag der Anmeldung: **30.03.83**
**Patentblatt 83/13**

(84) Benannte Vertragsstaaten: **AT CH DE FR GB IT LI NL SE**

(71) Anmelder: **SIEMENS-ALBIS AKTIENGESELLSCHAFT,
EGA1/Verträge und Patente Postfach, CH-8047 Zürich
(CH)**

(72) Erfinder: **Diem, Heinrich, Langgrütstrasse 145,
CH-8047 Zürich (CH)**
Erfinder: **Fosco, Guido, Langäckerstrasse 1,
CH-8957 Spreitenbach (CH)**
Erfinder: **Schmutz, Karl, Schneebelistrasse 1,
CH-8048 Zürich (CH)**

(54) **Abtastvorrichtung.**

(57) Es wird eine Abtastvorrichtung mit nur einem Spiegel (SP) angegeben, der schwenkbar auf einem Spiegelträger (ST) angeordnet ist. Zusätzlich ist ein Kippantrieb (PS1, PS2) vorgesehen, mit dessen Hilfe der Spiegelträger (ST) selbst schrittweise in verschiedene Positionen versetzbar ist. Dabei wird der Kippantrieb (PS1, PS2) jeweils lediglich während den relativ kurzen Totzeiten des Schwenkantriebes aktiviert.

0075063

EGA 11 Shi/beg

81P9814

Abtastvorrichtung

Die vorliegende Erfindung betrifft eine Abtastvorrichtung gemäss dem Oberbegriff des Patentanspruches 1.

Bekannte Abtastvorrichtungen, beispielsweise für Infrarotsysteme, arbeiten mit Hilfe eines beweglichen Spiegelsystems das die von einem sichtbar zu machenden Objekt einfallende, abgetastete Strahlung jeweils auf einen wärmeempfindlichen Detektor richtet. Ein solches Spiegelsystem kann beispielsweise zwei schwenkende Spiegel aufweisen, deren Schwenkachsen zueinander senkrecht angeordnet sind, um das Blickfeld zeilen- und spaltenweise abzutasten. Eine solche Abtastvorrichtung hat jedoch den Nachteil, dass die Schwenkbewegung eines der beiden Spiegel sehr schnell erfolgen muss, wodurch das Spiegelsystem nicht nur zu lärmig ist, sondern sich zudem nur mit relativ grossem Aufwand und Platzbedarf realisieren lässt.

In anderen Abtasteinrichtungen wird eine lineare Anordnung von Detektorelementen verwendet, die so angeordnet sind, dass mit deren Hilfe das Blickfeld beispielsweise zeilenweise abgetastet wird, wodurch der Spiegel mit schneller Schwenkbewegung entfällt. Eine solche Abtasteinrichtung erweist sich jedoch als nachteilig in bezug auf die grosse Anzahl der notwendigen Detektorelemente.

Daher liegt der Erfindung die Aufgabe zugrunde, eine Abtastvorrichtung zu schaffen, bei der diese Nachteile nicht mehr ins Gewicht fallen.

Diese Aufgabe wird erfindungsgemäss durch die im kennzeichnenden Teil des Patentanspruches 1 angegebenen Massnahmen gelöst. Vorteilhafte Ausgestaltungen der Erfindung sind in weiteren Ansprüchen angegeben.

Die Erfindung wird nachfolgend durch Beschreibung von Ausführungsbeispielen anhand von Zeichnungen näher erläutert. Es zeigt :

Fig.1 den schematischen Aufbau eines erfindungsgemässen Spiegelsystems mit piezoelektrischen Scheiben,

Fig.2 die schematische Darstellung einer linearen Anordnung von Detektorelementen,

Fig.3 das Schaltbild einer Steuerschaltung für die piezoelektrischen Scheiben,

Fig.4, 5 und 6 die Darstellungen verschiedener in einer solchen Steuerschaltung auftretender Signale.

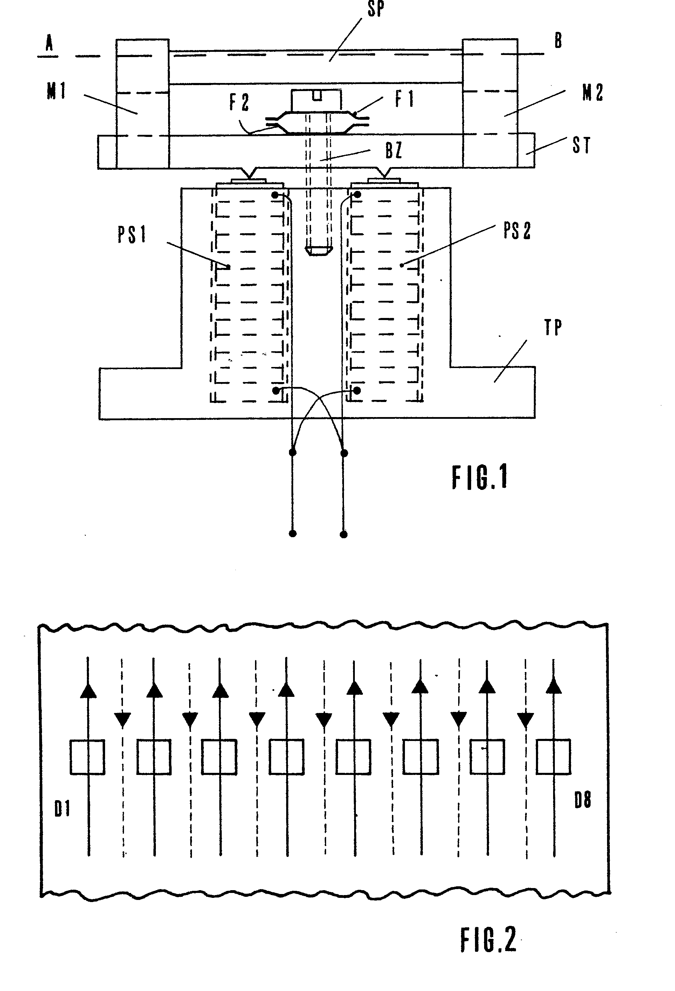

Das Spiegelsystem nach Fig.1 weist einen Spiegelträger ST auf, an dem ein Spiegel SP schwenkbar um eine Achse AB angeordnet ist. Der Spiegelträger ST liegt auf den Auflageflächen von zwei aus mehreren piezoelektrischen Scheiben zusammengesetzten Säulen PS1 und PS2, die mit Hilfe mindestens eines Bolzens BZ mit Gewindeansatz und je zweier Tellerfedern F1, F2 zwischen dem Spiegelträger ST und der Stützfläche einer Trägerplatte TP des Spiegelsystems derart eingeklemmt sind, dass die piezoelektrischen Säulen PS1 und PS2 eine Druckvorspannung aufweisen, wobei sich die Schwenkachse AB und die Symmetrieachsen der Säulen PS1 und PS2 zumindest angenähert in ein und derselben Ebene befinden. Vorzugsweise werden zwei Bolzen verwendet, die symmetrisch an beiden Seiten dieser Ebene angeordnet sind.

Der Detektor nach Fig.2 weist eine Anzahl von viereckigen auf einem Substrat linear angeordneten Detektorelementen D1 bis D8 auf, zwischen denen Lücken vorhanden sind, deren Breite etwa gleich gross wie die Breite der Detektorelemente ist.

Das Spiegelsystem nach Fig.1 funktioniert folgendermassen :

Die Säulen PS1 und PS2 sind elektrisch derart geschaltet, dass unter Spannung die eine Säule eine positive und die andere eine negative axiale Längenänderung erfährt, so dass eine Neigung der Achse AB gegenüber ihrer Position im spannungslosen Zustand bewirkt wird. Der Spiegel SP wird mittels eines an sich bekannten in der Figur nicht dargestellten elektrodynamischen Schwenkantriebes um die Achse AB geschwenkt, die auf zwei Kreuzfedergelenken M1, M2 gelagert ist. Dadurch wird die Strahlung des Blickfeldes beispielsweise zeilenweise untersucht, so dass die Detektoren D1 bis D8 entweder gleichzeitig oder auch zeitlich verschachtelt abgetastet werden können. Dabei werden die Säulen PS1 und PS2 während einer Schwenkbewegung in der einen Richtung ohne Spannung und während einer Schwenkbewegung in der anderen Richtung unter Spannung gehalten, mit dem Ergebnis, dass bei jeder Rückschwenkung wegen der gleichzeitig hervorgerufenen Neigung der Achse AB die Lichtstrahlen, die sonst über die Lücken zwischen den Detektorelementen hindurchdringen würden, in jedem Fall mitten über die Detektorelemente selbst geführt werden. Damit ist es möglich, bei gleichbleibender Auflösung des Bildes die Anzahl der Detektorelemente in einer linearen Anordnung auf die Hälfte zu reduzieren.

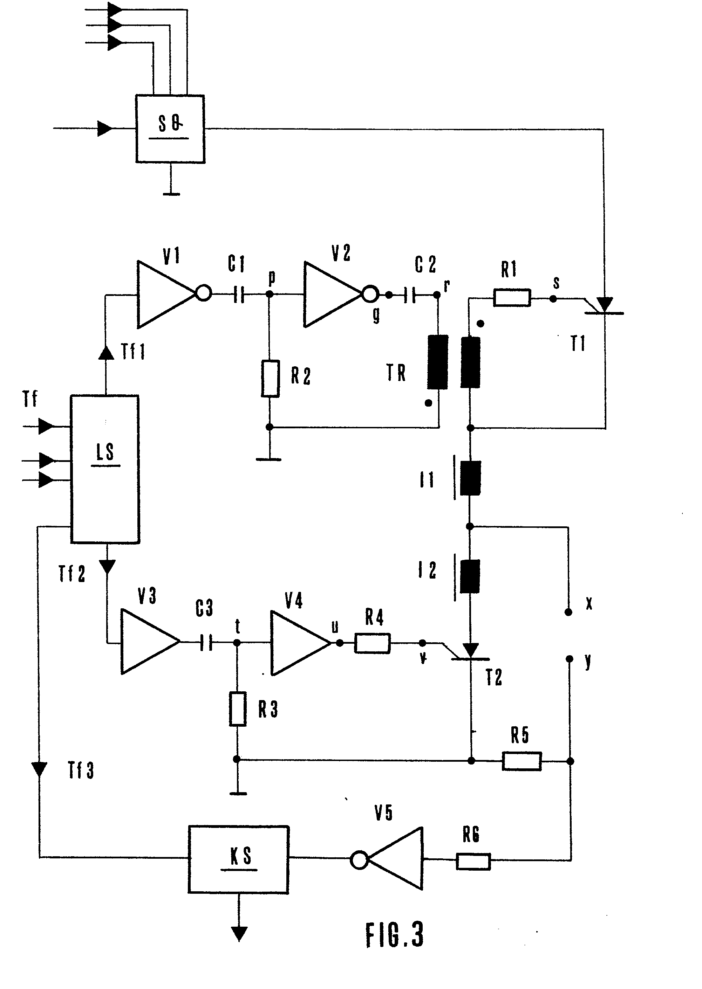

Die Steuerschaltung nach Fig.3 ist mit zwei Thyristoren bestückt, wobei zwischen der Kathode des ersten Thyristors T1 und der Anode des zweiten Thyristors T2 die Reihenschaltung zweier Induktivitäten I1 und I2 eingefügt ist, deren gemeinsamer Anschluss den einen Ausgang x der Steuerschaltung bildet. Dabei sind die Anode des Thyristors T1 und die Kathode des Thyristors T2 an eine Spannungsquelle SQ, die beispielsweise ein DC-Wandler, ein Gleichrichter oder eine Batterie sein kann, angeschlossen.

Ein Steuersignal Tf1 wird über die Reihenschaltung eines ersten invertierenden Verstärkers V1, eines ersten Kondensators C1, eines zweiten invertierenden Verstärkers V2, eines zweiten Kondensators C2 und der Primärwicklung eines Transformators TR geführt. Dabei ist die Reihenschaltung der Sekundärwicklung des Transformators TR und eines ersten Widerstandes R1 zwischen der Steuerelektrode des ersten Thyristors T1 und dessen Kathode eingefügt. Ein am Eingang des zweiten Verstärkers V2 parallel geschalteter zweiter Widerstand R2 bildet mit dem Kondensator C1 einen Hochpass. Ein zweites Steuersignal Tf2 wird über die Reihenschaltung eines Verstärkers V3, eines aus einem Kondensator C3 und einem Widerstand R3 bestehenden Hochpasses, eines Verstärkers V4 und eines Widerstandes R4 der Steuerelektrode des zweiten Thyristors T2 zugeführt, dessen Kathode über die Reihenschaltung eines Messwiderstandes R5, eines Schutzwiderstandes R6 und eines weiteren invertierenden Verstärkers V5 mit dem einen Eingang einer Kontrollschaltung KS verbunden ist, deren anderer Eingang mit einem dritten Steuersignal Tf3 beaufschlagt wird. Der gemeinsame Anschluss der Widerstände R5 und R6 bildet den zweiten Ausgang y der Steuerschaltung.

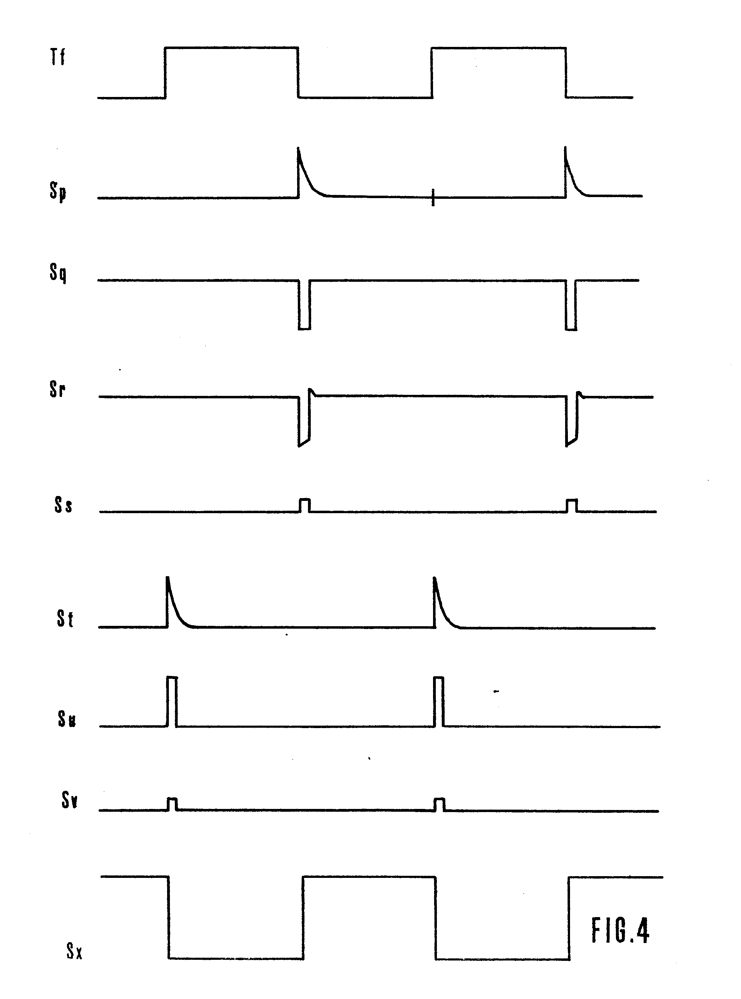

Die Steuerschaltung nach Fig.3 funktioniert folgendermassen :
Ein aus einer Steuerschaltung für den Schwenkantrieb, mit dem der Spiegel SP in die Schwenkbewegung gebracht wird, gewonnenes Steuersignal Tf liegt in bekannter Weise derart als Rechtecksignal vor, dass dessen Flanken mit den extremen Positionen des Spiegels SP zeitlich übereinstimmen. Es wird zunächst der Fall betrachtet, bei dem alle Steuersignale gleich sind, das heisst : Tf1 = Tf2 = Tf3 = Tf. In Fig.4 ist jeweils mit Sp, Sq, Sr,... der Verlauf der Spannung an den Punkten p, q, r,... von Fig.3 angegeben, worin p und q den Eingang bzw. den Ausgang des invertierenden Verstärkers V2, r den Eingang der Primärwicklung des Transformators Tr, s die Steuerelektrode des Thyristors T1, t und u den Eingang und den Ausgang des nicht invertierenden Verstärkers V4, v die Steuerelektrode des Thyristors T2 und x den Ausgang der Steuerschaltung bezeichnen. Die Verstärker V1 bis V4 sind in bekannter Weise derart mit Dioden bestückt, dass sie nur positive Signale abgeben. Somit erzeugen nur die abfallenden Flanken des Signals Tf Nadelimpulse SP am Widerstand R2 und nur die ansteigenden Flanken Nadelimpulse St am Widerstand R3. Diese Nadelimpulse werden von den entsprechenden Verstärkern V2 bzw. V4 verstärkt und bewirken danach abwechslungsweise die Zündung der Thyristoren T1 und T2. Dabei fällt jeweils die Zündung des Thyristors T1 mit den abfallenden Flanken und die Zündung des Thyristors T2 mit den ansteigenden Flanken des Steuersignals Tf zusammen. Da die piezoelektrischen Scheiben (Fig.1) sich nach aussen wie eine Kapazität verhalten, bilden sie einen fiktiven Kondensator C, der sich mit der ansteigenden Flanke des Signals Sx auflädt und mit dessen abfallender Flanke entlädt.

0075063
81P9814

Dadurch entstehen periodische Höhenänderungen der Säulen PS1 und PS2 (Fig.1), die eine mit dem Steuersignal Tf synchronisierte Kippbewegung des Spiegelträgers ST bewirken.

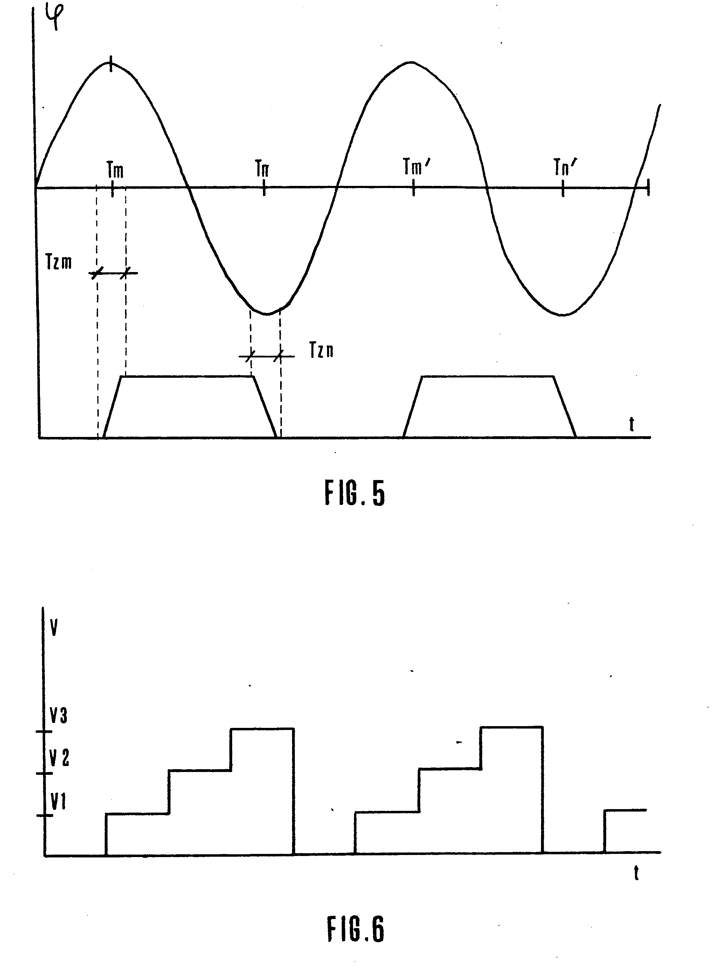

In Fig.5 ist der Verlauf des Schwenkwinkels des Spiegels SP sowie der Verlauf der Spannung an den piezoelektrischen Säulen PS1 und PS2 in Funktion der Zeit dargestellt. Die schnelle Arbeitsweise der Thyristoren bewirkt, dass die piezoelektrischen Säulen in sehr kurzer Zeit entweder die volle Spannung in den Zeitpunkten Tm,Tm',... oder die Nullspannung in den Zeitpunkten Tn, Tn',... erhalten. Dabei stellen diese Zeitpunkte Tm, Tm',... Tn, Tn',... kurze Totzeiten Tzm, Tzn für die Schwenkbewegung des Spiegels und kurze aktive Zeiten für die Kippbewegung des Spiegelträgers dar. Die Zeitabschnitte zwischen diesen Zeitpunkten stellen hingegen lange aktive Zeiten für die Schwenkbewegung und lange Totzeiten für die Kippbewegung dar. Dadurch entstehen keine Corioliskräfte, so dass der relativ grosse Spiegelträger ST ohne weiteres eine relativ schnelle Kippbewegung ertragen kann. Dies ermöglicht es, mit einem einzigen Spiegel zu arbeiten. Daraus ergibt sich zum einen der Vorteil, das ganze System platzsparend realisieren zu können, zum anderen entstehen weniger Strahlungsverluste durch Spiegelungen.

In weiterer Ausgestaltung der Erfindung können stufenweise mehrere Spannungssprünge an die piezoelektrischen Säulen PS1 und PS2 angelegt werden, was in einfacher Weise durch entsprechende Steuerung der Spannungsquelle SQ (Fig.3) und mit Hilfe von zwei verschiedenen Steuersignalen Tf1 ≠ Tf2 erfolgen kann, die in einer Logikschaltung LS gewonnen werden. In Fig.6 ist beispielsweise ein 4-Perioden-Zyklus dargestellt, wobei die Spannungsquelle schrittweise auf die Spannungswerte V1, V2 und V3 erhöht wird. Die Spannung V3 wird schliesslich mit Hilfe des Thyristors T2 auf 0 Volt abgebaut. Somit kann die Anzahl der Detektorelemente auf ein Viertel reduziert werden. In Fig.3 ist noch eine mit einer monostabilen Kippstufe versehenen Kontrollschaltung KS eingezeichnet, die über eine in der Figur nicht dargestellte Anzeigevorrichtung anzeigt, ob die regelmässigen Ladungen an den piezoelektrischen Säulen PS1, PS2 wirklich stattfinden. Die Steuerschaltung nach Fig.3 könnte ebenfalls mit anderen Halbleiterbausteinen, insbesondere mit FET-Transistoren anstelle der Thyristoren, aufgebaut werden. An Stelle eines Kippantriebes mit piezoelektrischen Säulen könnte auch ein elektromechanischer Antrieb mit Elektromagneten eingesetzt werden. Der Schwenkantrieb kann vorzugsweise ein Kreuzfedergelenk aufweisen, wie es aus dem Aufsatz "Allgemeine Untersuchungen über das Kreuzfedergelenk" von Hartwig Hasselmeier im Jenaer Jahrbuch 1954, VEB Gustav Fischer Verlag Jena 1954, Seite 279.ff., bekannt ist.

PATENTANSPRUECHE

1. Abtastvorrichtung mit einem zur Abtastung eines Blickfeldes um eine Schwenkachse schwenkbaren Spiegel, der eine einfallende Strahlung jeweils auf einen strahlungsempfindlichen Detektor richtet, d a d u r c h   g e k e n n z e i c h n e t , dass der schwenkbare Spiegel (SP) auf einem Spiegelträger (ST) angeordnet und mit einem Schwenkantrieb verbunden ist, und dass der Spiegelträger (ST) seinerseits mit Hilfe eines elektromechanischen Kippantriebes (PS1, PS2) schrittweise in verschiedene Positionen versetzbar ist, wobei, um die Wirkung der Corioliskräfte zu verringern, der Kippantrieb (PS1, PS2) jeweils gerade während den relativ kurzen Totzeiten des Schwenkantriebs aktiv wird, so dass der Spiegelträger jeweils in einer dieser Positionen verharrt, während der Spiegel die ihr zugeordneten Spuren mit seiner Schwenkbewegung abtastet.

2. Abtastvorrichtung nach Anspruch 1, d a d u r c h   g e k e n n z e i c h n e t , dass der elektromechanische Kippantrieb (PS1, PS2) ein piezoelektrischer Kippantrieb ist.

3. Abtastvorrichtung nach Anspruch 2, d a d u r c h   g e k e n n z e i c h n e t , dass der piezoelektrische Kippantrieb mit einer Steuerschaltung gesteuert ist, die wenigstens ein gesteuertes Gleichrichterelement aufweist.

4. Abtastvorrichtung nach Anspruch 3, d a d u r c h   g e k e n n z e i c h n e t , dass zwei Thyristoren (T1, T2) vorhanden sind, wobei zwischen der Kathode des ersten Thyristors (T1) und der Anode des zweiten Thyristors (T2) die Reihenschaltung zweier Induktivitäten (I1, I2) eingefügt ist, deren gemeinsamer Anschluss den Ausgang (x) der Steuerschaltung bildet.

5. Abtastvorrichtung nach einem der Ansprüche 1 bis 4, d a d u r c h   g e k e n n z e i c h n e t ,   dass der Schwenkantrieb mit Kreuzfedergelenken versehen ist.

FIG.1

FIG.2

FIG.3

FIG.4

0075063

81P9814

FIG. 5

FIG.6

| | **EINSCHLÄGIGE DOKUMENTE** | | EP 82102080.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | CH - A - 483 169 (ELTRO) | 1 | H 04 N 3/08 |
| Y | * Spalte 3, Zeile 23 - Spalte 4 Zeile 10 * | 2,5 | G 02 B 27/17 |
| | --- | | |
| Y | US - A - 4 203 654 (ELLIS) | 2,5 | |
| | * Fig.; Spalte 1, Zeile 66 - Spalte 3, Zeile 23 * | | |
| | --- | | |
| Y | DE - B1 - 2 715 908 (ELTRO) | 5 | |
| | * Spalte 1, Zeilen 3-13,50-52; Fig. 1; Spalte 3, Zeile 62 - Spalte 4, Zeile 8; Fig. 7; Spalte 4, Zeile 58 - Spalte 6, Zeile 8 * | | |
| | --- | | RECHERCHIERTE SACHGEBIETE (Int. Cl. ³) |
| A | DE - B2 - 2 329 740 (STANDARD) | | H 04 N 1/00 |
| | * Spalte 1, Zeilen 41-44; Fig. 2; Spalte 2, Zeile 60 - Spalte 3, Zeile 3 * | | H 04 N 3/00 |
| | | | H 04 N 5/00 |
| | --- | | G 02 B 7/00 |
| A | DE - A - 1 488 072 (TOKYO) | | G 02 B 27/00 |
| | * Fig. 4; Seite 9, 2. Absatz * | | G 06 K 7/00 |
| | --- | | G 08 C 23/00 |
| A | DE - B - 1 248 781 (BADISCHE ANILIN) | | H 04 Q 9/00 |
| | | | H 02 P 8/00 |
| | * Spalte 2, Zeilen 27-29,35,36; Fig. 2; Spalte 4, Zeilen 8-11; Spalte 6, Zeilen 14,15 * | | G 05 F 1/00 |
| | ---- | | |

X  Der vorliegende Recherchenbericht wurde für alle Patentansprüche erstellt.

| Recherchenort | Abschlußdatum der Recherche | Prüfer |
|---|---|---|
| WIEN | 20-12-1982 | BENISCHKA |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82